(19) Europäisches Patentamt
European Patent Office
Office européen des brevets

(11) Veröffentlichungsnummer: **0 357 995 B1**

# (12) EUROPÄISCHE PATENTSCHRIFT

(45) Veröffentlichungstag der Patentschrift: **29.06.94**

(51) Int. Cl.[5]: **C08J 7/04**, C09D 175/04, C08G 18/58, //C08L77/00

(21) Anmeldenummer: **89114875.1**

(22) Anmeldetag: **11.08.89**

## (54) Mehrschichtformkörper auf Basis von Polyamiden.

(30) Priorität: **24.08.88 DE 3828689**

(43) Veröffentlichungstag der Anmeldung:
**14.03.90 Patentblatt 90/11**

(45) Bekanntmachung des Hinweises auf die Patenterteilung:
**29.06.94 Patentblatt 94/26**

(84) Benannte Vertragsstaaten:
**DE FR GB IT NL**

(56) Entgegenhaltungen:
**EP-A- 0 232 540**
**EP-A- 0 272 563**
**EP-A- 0 331 996**
**US-A- 2 999 764**

(73) Patentinhaber: **BAYER AG**

**D-51368 Leverkusen(DE)**

(72) Erfinder: **Meyer, Rolf-Volker, Dr.**
**Buchheinerstrasse 23**
**D-4150 Krefeld(DE)**
Erfinder: **Fahnler, Friedrich**
**Wimmersweg 60**
**D-4150 Krefeld(DE)**
Erfinder: **Müller, Hanns-Peter, Dr.**
**Weizenfeld 36**
**D-5060 Bergisch-Gladbach 2(DE)**
Erfinder: **Wandel, Martin, Dr.**
**Donatusstrasse 17**
**D-4047 Dormagen 11(DE)**
Erfinder: **Heinz, Hans-Detlef, Dr.**
**Breslauer Strasse 31**
**D-4150 Krefeld(DE)**

EP 0 357 995 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist die Verwendung wärmehärtbarer Reaktionsharzgemische aus Polyisocyanaten (a), Polyepoxiden (b) und Reaktionsinhibitoren (c), wärmeaktivierbaren Reaktionskatalysatoren (d) und gegebenenfalls Hilfs- und Zusatzmitteln (e) zur Herstellung von Mehrschichtformkörpern auf Polyamidbasis mit einer ausgehärteten Duromerschicht durch thermisches Aushärten der Reaktionsharzgemische auf den Polyamidformkörpern. Bevorzugt werden die Reaktionsharzgemische auf im Rotations-, Extrusions- oder Schleudergießverfahren nach dem anionischen Lactam-Polymerisationsverfahren hergestellte, noch von der Polymerisationswärme heiße Polyamidformkörper aufgetragen, z.B. als Innenbeschichtung auf rotationsgegossenen Polyamidrohren. Weiterer Erfindungsgegenstand sind entsprechende duromerbeschichtete Mehrschichtformkörper nach obigem Verwendungsverfahren.

Polyamide lassen sich auf verschiedenen Wegen und aus einer Vielzahl von Bausteinen herstellen. Technisch genutzt werden die hydrolytische Polymerisation von Polyamid-bildenden Bausteinen wie Lactamen und geeigneten Diamin/Dicarbonsäure-Gemischen und auch die aktivierte anionische Polymerisation von Lactamen.

Alle Polyamide, insbesondere jene mit mindestens 30 Gew.-% CONH-Gruppen, neigen aufgrund ihrer hohen Polarität zu erheblichen Wechselwirkungen mit niedermolekularen Verbindungen wie Wasser, Alkoholen, Phenolen und anderen Lösungsmitteln. Dies führt in aller Regel zu oft unerwünschten Effekten wie z.B. Weichmachung und Dimensionsänderungen von Formteilen aus diesen Werkstoffen.

Aus diesem Grunde sind Polyamide z.B. als Barrier-Materialien wenig geeignet, es sei denn in Mehrschichtsystemen wie z.B. Verbundfolien aus Polyamiden und Polyolefinen, die insgesamt ein befriedigendes Barrier-Verhalten gegen polare und unpolare Solventien zeigen.

Durch anionische Polymerisation von Lactamen, insbesondere von $\epsilon$-Caprolactam, hergestellte Formkörper enthalten, bedingt durch die Reaktionstemperatur, ca. 2-5 % extrahierbare Monomeranteile, die i.a. aus den fertigen Formkörpern nicht extrahiert werden.

Diese Formkörper (CONH-Gehalt: ~ 38 %) neigen ebenfalls zu Wechselwirkungen mit polaren Verbindungen, wobei der Monomergehalt auch extrahierbar ist. Aus diesem Grunde sind z.B. Rohre aus Guß-Polyamid nicht für den Einsatz als Trinkwasser-Rohre zugelassen, obwohl diese Materialien im übrigen Eigenschaftsbild sehr gut dafür geeignet sind.

Es wurde schon früher versucht, Polyurethanschichten auf Polyamid-Formkörper aufzutragen, wozu eine Vorbehandlung der PA-Formkörper mit Ameisensäure und danach mit einem Aminoalkohol notwendig ist (DE-A 2 142 970). Damit soll eine bessere PA/PU-Haftung erreicht werden. Die Applikation des Polyurethans hat außerdem in einer komplizierten Apparatur zu geschehen.

Die DE-A 2 413 103 beschreibt ein ähnlich kompliziertes System zum Aufbringen einer PU-Schicht auf die Oberfläche von rotationssymmetrischen PA-Formkörpern. Auch hier ist eine Vorbehandlung erforderlich. Über die Eigenschaften solcher modifizierter Polyamide wird nichts ausgesagt.

Die DE-A 3 440 534 schließlich beschreibt das Auftragen wäßriger Dispersionen als Grundierung für Kunststoffbeschichtungen, wobei als Dispersionspolymere Polyurethane und u.a. auch Polyamide genannt werden.

Auf diese Weise sollen bessere Kunststofflackierungen möglich sein.

Keine der vorbeschriebenen Schriften gibt Hinweise auf die Möglichkeit, Polyamide durch einfache Applikation und Vernetzung geeigneter Monomerer oder Reaktionskomponenten zu undurchlässigen Duromeren gegen den Einfluß z.B. von polaren Solventien nachhaltig zu schützen bzw. Barrier-Wirkungen auszuüben. Diese ist jedoch eine Aufgabe der vorliegenden Erfindung.

Solche Systeme sind prinzipiell von hohem technologischem Interesse, da sie neue Einsatzmöglichkeiten für Polyamide erschließen.

Überraschend wurde nun gefunden, daß man solche Duromermodifizierten Polyamid-Formkörper leicht erhalten kann, wenn man reaktive, wärmehärtbare, mit Inhibitoren gegen vorzeitige Reaktion geschützte Reaktionsharzgemische aus Polyisocyanaten und Polyepoxiden unter Verwendung geeigneter wärmeaktivierbarer Katalysatoren auf der Oberfläche von Polyamidformteilen bei erhöhten Temperaturen aushärtet.

Die Aushärtung kann nach Auftragen der Reaktionsharzgemische auf kalte Polyamidoberflächen durch Wärme, Infrarotstrahlung oder Mikrowellenheizung erfolgen. Bevorzugt werden die Reaktionsharzgemische jedoch auf heiße Polyamidoberflächen, wie sie bei der anionischen Lactampolymerisation zu Formkörpern erhalten werden, aufgetragen und so durch deren inhärente Polymerisationswärme gehärtet.

Geeignete Reaktionsharzgemische aus a), b), c) und gegebenenfalls d) und e) sind in der eigenen, älteren, noch unveröffentlichten Anmeldung DE-A 3 807 660 beschrieben. Derartige Reaktionsgemische haben sich als besonders bevorzugt zur Herstellung der erfindungsgemäßen Polyamid-Mehrschichtkörper geeignet erwiesen.

Gegenstand der Erfindung ist daher die Verwendung wärmehärtbarer, lagerstabiler Reaktionsharzgemische, die

a) mindestens ein organisches Polyisocyanat,

b) mindestens eine, mindestens zwei Epoxidgruppen aufweisende organische Verbindung

in einer solchen Menge, die einem Äquivalentverhältnis von Isocyanatgruppen aus a) zu Epoxidgruppen aus b) von 1,2:1 bis 70:1, insbesondere 1,2:1 bis 30:1 entspricht,

c) mindestens ein, die vorzeitige Reaktion von a) und b) inhibierendes Alkylierungsmittel,

d) mindestens einen, durch Wärme aktivierbaren Katalysator in Mengen von 0,01 bis 10 Gew.-%, insbesondere 0,1 bis 2 Gew.-% (bezogen auf a) + b) + c)),

e) und gegebenenfalls weitere, übliche Hilfs- und Zusatzmittel in wirksamen Mengen

enthalten,

zur Herstellung von Mehrschichtformkörpern auf Polyamidbasis mit einer ausgehärteten Duromerschicht, unter Auftragen des Reaktionsharzgemisches und dessen thermisches Aushärten auf Polyamidformkörpern.

Bei der Komponente a) der wärmehärtbaren Gemische handelt es sich um beliebige organische Polyisocyanate wie sie aus der Polyurethanchemie bekannt sind. Geeignet sind beispielsweise aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\,(NCO)_n\ ,$$

in der

n = 2-4, vorzugsweise 2, und

Q einen aliphatischen Kohlenwasserstoffrest mit 2-18, vorzugsweise 6-10 C-Atomen, einen cycloaliphatischen Kohlenwasserstoffrest mit 4-19, vorzugsweise 5-15 C-Atomen, einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen

bedeuten, z.B. aliphatische oder cycloaliphatische Polyisocyanate wie 1,4-Tetramethylen-diisocyanat, 1,6-Hexamethylen-diisocyanat, 1,12-Dodecan-diisocyanat, Cyclobutan-1,3-diisocyanat, Cyclohexan-1,3- und -1,4-diisocyanat sowie beliebige Gemische deren Isomeren, 1-Isocyanato-3,3,5-trimethyl-5-isocyanatomethyl-cyclohexan (Isophorondiisocyanat), 2,4- und 2,6-Hexahydrotoluylendiisocyanat sowie beliebige Gemische diese Isomeren, Hexahydro-1,3- und/oder -1,4-phenylendiisocyanat, Perhydro-2,4′-und/oder -4,4′-diphenylmethan-diisocyanat, aromatische Polyisocyanate wie 3,3′-Dimethyl- oder 3,5,3′,5′-Tetramethyl-dicyclohexylmethandiisocyanat, 1,3- und 1,4-Phenylen-diisocyanat, 2,4- und 2,6-Toluylendiisocyanat sowie beliebige Gemische dieser Isomeren, Diphenylmethan-2,4′-und/oder -4,4′- und/oder 2,2′-diisocyanat, Naphthylen-1,5-diisocyanat. Ferner kommen beispielsweise erfindungsgemäß in Frage: Triphenylmethan-4,4′,4″-triisocyanat, Polyphenyl-polymethylenpolyisocyanate, wie sie durch Anilin-Formaldehyd-Kondensation und anschließende Phosgenierung erhalten werden, m- und p-Isocyanato-phenylsulfonyl-isocyanate, perchlorierte Arylpolyisocyanate, Carbodiimidgruppen aufweisende Polyisocyanate, Norbornan-diisocyanate, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, durch Telomerisationsreaktionen hergestellte Polyisocyanate, Estergruppen aufweisende Polyisocyanate, Umsetzungsprodukte der obengenannten Isocyanate mit unterschüssigen Mengen an Diolen und polymere Fettsäureester enthaltende Polyisocyanate, sowie araliphatische Diisocyanate wie m- oder p-Xylylendiisocyanat.

Ferner ist es möglich, beliebige Mischungen der vorgenannten polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren (TDI), insbesondere Polyphenyl-polymethylen-polyisocyanate, wie sie durch Anilin-Formaldehyd-Kondensation und anschließende Phosgenierung hergestellt werden (rohes MDI) und Carbodiimidgruppen, Urethangruppen, Allophanatgruppen, Isocyanuratgruppen, Harnstoffgruppen oder Biuretgruppen aufweisende Polyisocyanate (modifizierte Polyisocyanate), insbesondere solche modifizierten Polyisocyanate, die sich vom 2,4- und/oder 2,6-Toluylendiisocyanat bzw. vom 4,4′- und/oder 2,4′-Diphenylmethandiisocyanat ableiten und die entsprechenden Produkte aus Hexamethylendiisocyanaten (HDI), z.B. Biuretpolyisocyanate und Isocyanuratpolyisocyanate auf Basis HDI. Auch ein Isomeren- und/oder Homologengemisch von Polyisocyanaten der Diphenylmethan-Reihe mit einem Gehalt von mehr als 20 Gew.-% 2,4′-Diisocyanatodiphenylmethan ist gut geeignet.

Besondere Ausführungsformen der aromatischen Isocyanat-Komponente a) und der Epoxidsysteme (Komponente b) sind in der DE-A 36 00 764 beschrieben und können hier bevorzugt analog verwendet

werden.

Bei der Komponente b) handelt es sich um beliebige, mindestens zwei Epoxidgruppen, d.h. vorzugsweise 1,2-Epoxidgruppen aufweisende aliphatische, cycloaliphatische, aromatische oder heterocyclische Verbindungen. Die bevorzugten als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4′-Dihydroxydiphenylmethan, von 4,4′-Dihydroxy-3,3′-dimethyldiphenylmethan, von 4,4′-Dihydroxydiphenylether, 4,4′-Dihydroxydiphenylcyclohexan, von 4,4′-Dihydroxy-3,3′-dimethyldiphenylpropan, von 4,4′-Dihydroxydiphenyl, aus 4,4′-Dihydroxydiphenylsulfon, von Tris-(4-hydroxyphenyl)methan, den Chlorierungs- und Bromierungsprodukten der vorstehend genannten Diphenole, von Novolacken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. GB-B 1 017 612) oder von Polyphenolen, die durch Kondensation von Phenolen und langkettigen, mindestens zwei Halogenatome enthaltenden Halogenparaffinen erhalten wurden (vgl. GB-B 1 024 288). Weiterhin seien genannt: Polyepoxidverbindungen auf der Basis von aromatischen Aminen und Epichlorhydrin, z.B. N-Di-(2,3-epoxypropyl)anilin, N,N′-Dimethyl-N,N′-diepoxypropyl-4,4′-diaminodiphenylmethan, N-Diepoxypropyl-4-amino-phenylglycidether (vgl. GB-B 772 830 und 816 923).

Außerdem kommen in Frage: Glycidylester mehrwertiger aromatischer, aliphatischer und cycloaliphatischer Carbonsäuren beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N′-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen als Komponente b) verwendet:
Polyglycidylether mehrwertiger Phenole, insbesondere von Bisphenol A; Polyepoxidverbindungen auf der Basis von aromatischen Aminen, insbesondere Bis(N-epoxypropyl)anilin, N,N′-Dimethyl-N,N′-diepoxypropyl-4,4′-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan, 3,4-Epoxycyclohexylmethan-3,4-epoxycyclohexan-carboxylat.

Flüssige Polyepoxide oder niedrigviskose Diepoxide, wie Bis-(N-epoxipropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird in einer solchen Menge eingesetzt, die einem Äquivalentverhältnis von Isocyanatgruppen zu Epoxidgruppen von 1,2:1 bis 500:1, vorzugsweise 3:1 bis 70:1 und insbesondere 5:1 bis 30:1, entspricht.

Bei den Alkylierungsmitteln c) handelt es sich vorzugsweise um beliebige, alkylierend wirkende Ester von organischen Sulfonsäuren. Vorzugsweise weisen diese Sulfonsäurealkylester ein Molekulargewicht von 110 bis 250 auf. Geeignet sind sowohl aliphatische Sulfonsäurealkylester wie n- Butansulfonsäuremethylester, n-Perfluorbutansulfonsäuremethylester oder n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -n-butylester, 1-Naphthalinsulfonsäuremethylester, 3-Nitrobenzolsulfonsäure-methylester oder 2-Naphthalinsulfonsäuremethylester.Die genannten aromatischen Sulfonsäureester sind bevorzugt. Besonders bevorzugt wird p-Toluolsulfonsäuremethylester als Komponnte c) verwendet. Ebenfalls geeignet jedoch weniger bevorzugt sind Methyliodid und Dimethylsulfat als Komponente c). Vorzugsweise übertragen die Alkylierungsmittel c) Alkylgruppen mit 1 bis 4 C-Atomen, insbesondere Methylgruppen übertragende Alkylierungsmittel sind bevorzugt.

Vorzugsweise wird die Komponente c) in Mengen von 0,001 bis 1 Gew.-%, insbesondere von 0,005 bis 0,3 Gew.-% jeweils bezogen auf die Summe aus Komponenten a) und b) eingesetzt. Die Komponente c) kann in reiner Form oder z.B. als Lösung in der Komponente a) dem Mehrkomponentensystem zudosiert werden.

Der Inhibitor c) wird mit dem Komponenten a) und b) vorzugsweise vor Zumischen der anderen Komponenten zur Durchführung der Inhibierungsreaktion, bis etwa 150 °C erwärmt, z.B. auf 120 °C bis etwa 2 Stunden, und dann wieder abgekühlt. Die so lagerstabilen, nicht mehr reaktionsfähige Mischung kann dann bei einer Temperatur unterhalb der Wärmeaktivierungstemperatur, vorzugsweise bei Raumtemperatur, mit dem Katalysator d) vermischt werden, gegebenenfalls werden zusätzlich die Hilfs- und Zusatzstoffe e) eingetragen. Die Hilfs- und Zusatzstoffe e) können - soweit sinnvoll - aber auch bereits während der Inhibierungsphase in (a) + b) + c)) enthalten sein.

Bei der wärmeaktivierbaren, latenten Katalysatorkomponente d) handelt es sich um tertiäre oder quartäre Ammoniumsalze aus

(i) organischen Aminen und

(ii) alkylierend wirkenden oder sauren Estern von organischen Phosphonsäuen oder der Phosphorsäure.

Derartige Katalysatoren ergeben lagerstabile Systeme oder Systeme mit einer sehr langen "offenen" Topfzeit bei Raumtemperatur; erst oberhalb einer bestimmten Temperatur, z.B. >60 bis >80 °C, sind sie wärmeaktivierbar und werden katalytisch wirksam.

Bei dem Bestandteil (i) der Katalysatoren d) handelt es sich um beliebige mono- oder polyfunktionelle organische Amine mit sekundären und/oder tertiären Aminogruppen. Bei der Herstellung der Katalysatoren können sekundäre Aminogruppen durch Alkylierung in tertiäre Ammoniumgruppen, tertiäre Aminogruppen durch Neutralisation in tertiäre Ammoniumgruppen oder durch Quaternierung in quartäre Ammoniumgruppen überführt werden. Geeignete Amine der genannten Art weisen im allgemeinen ein Molekulargewicht von 45 bis 353, vorzugsweise von 45 bis 185 auf.

Typische Beispiele geeigneter Amine sind Dimethylamin, Trimethylamin, Diethylamin, Triethylamin, Di-n-butylamin, Tri-n-butylamin, N,N′-Dimethylethylendiamin, N,N,N′,N′-Tetramethylendiamin, N,N-Dimethylbenzylamin oder Permethyldiethylentriamin.

Bei dem Bestandteil (ii) handelt es sich um alkylierend wirkende oder saure Ester von organischen Phosphonsäuren oder der Phosphorsäure. Vorzugsweise werden als Phosphonsäureester neutrale alkylierend wirkende Ester von organischen Phosphonsäuren verwendet. Diese Verbindungen weisen im allgemeinen ein Molekulargewicht von 124 bis 214 auf. Gut geeignet sind beispielsweise Methanphosphonsäuredimethylester, Methanphosphonsäurediethylester, Benzolphosphonsäure-dimethylester, Benzolphosphonsäurediethylester oder Ethanphosphonsäurediethylester. Als Ester der Phosphorsäure können sowohl einbasisch saure Ester als auch neutrale Ester verwendet werden. Diese Verbindungen weisen im allgemeinen ein Molekulargewicht von 126 bis 266 auf. Geeignet sind beispielsweise Dimethylphosphat, Diethylphosphat, Di-n-butylphosphat, Triethylphosphat oder Tri-n-butylphosphat. Bevorzugte Bestandteile (ii) der erfindungswesentlichen Katalysatoren d) sind Methanphosphonsäure-dimethylester und Di-n-butylphosphat.

Die Herstellung der Katalysatoren d) erfolgt nach bekannten Verfahren (z.B. Houben-Weyl, Bd. XII/2, S. 262 ff.) durch Umsetzung der beispielhaft genannten Komponenten (i) und (ii) in vorzugsweise äquivalenten Mengen mit oder ohne Lösungsmittel bei Temperaturen von 20 bis 200 °C. Dabei kann es vorteilhaft sein, unter Inertgas und/oder Druck zu arbeiten. Es ist auch möglich, beispielsweise einen Überschuß der Komponenten (i) oder (ii) einzusetzen und anschließend gegebenenfalls den nicht umgesetzten Überschuß beispielsweise destillativ zu entfernen.

Besonders bevorzugte Beispiele erfindungsgemäß verwendbarer Katalysatoren d) sind.

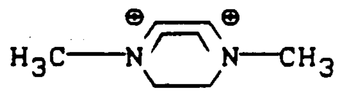

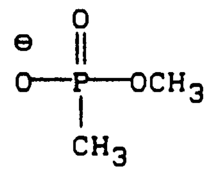

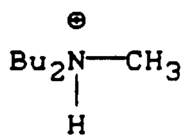

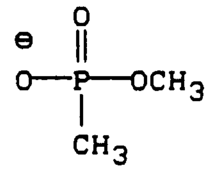

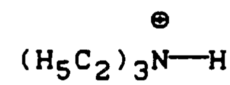

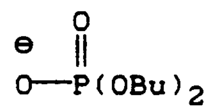

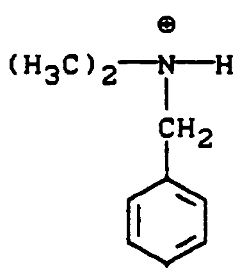

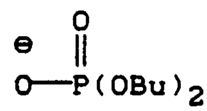

Bu = n-Butyl

Es ist ebenfalls möglich, latente Katalysatoren d) vom Typ der Borchlorid-Amin-Komplexe einzusetzen, z.B. Dimethylbenzylamin•$BCl_3$ oder Dimethyloctylamin•$BCl_3$. Weiterhin sind für die Umsetzung im Prinzip alle bekannten, wärmeaktivierbaren Katalysatoren für diesen Reaktionstyp einsetzbar.

Bezogen auf 100 Gew.-Teile des Gemischs aus den Komponenten a) und b) werden die Katalysatoren d) in einer Menge von 0,01 bis 10, vorzugsweise 0,1 bis 2 Gew.-Teilen eingesetzt. Es ist selbstverständlich auch möglich, Gemische von unterschiedlichen Katalysatoren einzusetzen. Bei Raumtemperatur feste Katalysatoren d) werden vorzugsweise bei der Herstellung der erfindungsgemäßen Gemische vorab, in einer der Komponenten, vorzugsweise in der Komponente a) gelöst.

Zur Herstellung der erfindungsgemäßen Gemische werden die wesentlichen Komponenten a), b), c) und d) miteinander vermischt, wobei die Menge der Komponente b) so bemessen wird, daß im dem Gemisch die Komponenten a) und b) in einem Äquivalentverhältnis von Isocyanatgruppen zu Epoxidgruppen von 1,2:1 bis 70:1, vorzugsweise 1,2:1 bis 30:1 entsprechenden Mengen vorliegen.

Bei den gegebenenfalls in den erfindungsgemäßen Gemi schen ebenfalls vorliegenden Hilfs- und Zusatzmitteln e) handelt es sich beispielsweise um

e1) polymerisierbare, olefinisch ungesättigte Monomere, die in Mengen von bis zu 100 Gew.-%, vorzugsweise bis zu 50 Gew.-%, bezogen auf das Gesamtgewicht der Komponenten (a) plus b)) zum Einsatz gelangen. Weitere, gegebenenfalls mitzuverwendende Hilfs- und und Zusatzmittel e) sind beispielsweise

e2) gegenüber Isocyanatgruppen reaktionsfähige Wasserstoffatome aufweisende organische Verbindungen, die gegebenenfalls in solchen Mengen mitverwendet werden, daß auf jede Isocyanatgruppe der Komponente a) bis zu 0,5, vorzugsweise bis zu 0,4 aktive Wasserstoffatome der Komponente e2) entfallen. Im Falle der Mitverwendung derartiger Zusatzmittel e2) bezieht sich das obengenannte Äquivalentverhältnis von Isocyanatgruppen zu Epoxidgruppen auf den Isocyanat-Überschuß, der nach der Reaktion mit den aktiven Wasserstoffatomen verbleibt.

Die Mitverwendung der Hilfsmittel e1) bzw. e2) ist im allgemeinen nicht erforderlich. Die unter e1) genannten Zusatzmittel sind im übrigen gegenüber den unter e2) genannten bevorzugt. Grundsätzlich ist es

jedoch auch möglich, gleichzeitig beide Arten von Zusatzmitteln mitzuverwenden. Bei der Verwendung von Zusatzmittel e1) ist die Mitverwendung von klassichen Polymerisations-Initiatoren wie z.B. von Benzoylperoxid möglich, im allgemeinen jedoch nicht erforderlich.

Typische Beispiele von Zusatzmitteln e1) sind olefinisch ungesättigte Monomere, die keine gegenüber NCO-Gruppen reaktiven Wasserstoffatome aufweisen wie z.B. Diisobutylen, Styrol, $C_1$-$C_4$-Alkylstyrole wie $\alpha$-Methylstyrol, $\alpha$-Butylstyrol, Vinylacetat, Acrylsäure-$C_1$-$C_6$-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)acrylsäure-$C_1$-$C_4$-alkylester verwendet, vorausgesetzt, die Zusatzmittel e1) werden überhaupt eingesetzt.

Beispiele für gegebenenfalls mitzuverwendende Zusatzmittel e2) mit gegenüber Isocyanatgruppen reaktionsfähigen Wasserstoffatomen sind insbesondere 2 bis 8, vorzugsweise 2 bis 3 alkoholische Hydroxylgruppen aufweisende organische Verbindungen des Molekulargewichtsbereichs 62 bis 2000, wie sie als Aufbaukomponenten für Polyurethane an sich bekannt sind. Beispiele sind einfach mehrwertige Alkohole wie Ethylenglykol, Hexamethylenglykol, Glycerin oder Trimethylolpropan; Estergruppen aufweisende Polyhydroxylverbindungen wie z.B. Ricinusöl oder Polyhydroxylpolyester wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind oder Polyhydroxypolyether wie sie durch Anlagerung von Alkylenoxiden wie Propylen oxid und/oder Ethylenoxid an geeignete Startermoleküle wie z.B. Wasser, die soeben genannten einfachen Alkohole oder auch Amine mit mindestens zwei aminischen NH-Bindungen zugänglich sind.

Weitere, gegebenenfalls mitzuverwendende Hilfs- und Zusatzmittel e) sind

e3) an sich bekannte, übliche Katalysatoren der NCO-Chemie, z.B. die Trimerisation von Isocyanatgruppen und/oder die Addition von Isocyanatgruppen an Epoxidgruppen beschleunigende Katalysatoren. Derartige Katalysatoren können neben den erfindungswesentlichen, wärmeaktivierenden Katalysatoren d) dann mitverwendet werden, wenn die Reaktivität der erfindungsgemäßen Gemische einem speziellen Verwendungszweck angepaßt werden soll, jedoch setzen sie die Lagerstabilität der Mischung herab und der Charakter der wärmeaktivierbaren Reaktionsharzmischung im strengen Sinn wird verfälscht.

Geeignete Zusatzmittel e3) sind beispielsweise tertiäre Amine, wie Triethylamin, Tributylamin, N-Methyl-morpholin, N-Ethylmorpholin, N,N,N',N'-Tetramethyl-ethylendiamin, Pentamethyl-diethylentriamin, 1,4-Diazabicyclo(2,2,2)-octan, Bis-(dimethylaminoalkyl)-piperazine (DE-A 2 636 787), N,N-Dimethylbenzylamin, N,N-Dimethylcyclohexylamin oder monocyclische und bicyclische Amidine (DE-A 1 720 633), Bis-(dialkylamino)alkyl-ether. Als Zusatzmittel e3) kommen an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage. Als Katalysatoren e3) kommen ferner stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren e3) eingesetzt werden (DE-A 1 769 043).

Auch organische Metallverbindungen, insbesondere organische Zinnverbindungen können als Katalysatoren e3) verwendet werden. Als organische Zinnverbindungen kommen vorzugsweise Zinn(II)-salze von Carbonsäure wie Zinn(II)-acetat, Zinn(II)-octoat, Zinn(II)-ethylhexoat und Zinn(II)-laurat und die Zinn(IV)-Verbindungen, z.B. Dibutylzinnoxid, oder Dioctylzinndiacetat in Betracht.

Katalysatoren e3), die die Additionsreaktion von Isocyanatgruppen an Epoxidgruppen beschleunigen, sind beispielsweise die in "Russian Chem. Reviews 52 (6), (1983) Seiten 576 bis 593" genannten Verbindungen.

Weitere Hilfs- und Zusatzmittel e4), die gegebenenfalls mitverwendet werden können, sind beispielsweise Füllstoffe, Pigmente oder Weichmacher. Geeignete Füllstoffe sind z.B. Quarzmehl, Kreide oder Aluminiumoxid. Geeignete Pigmente sind z.B. Titandioxid, Eisenoxid oder organische Pigmente wie Phthalocyanin-Pigmente. Geeignete Weichmacher sind z.B. Dioctylphthalat, Tributyl-oder Triphenylphosphat. Auch die Mitverwendung von löslichen Farbstoffen oder Verstärkungsmaterialien wie z.B. Glasfasern oder von Glasgeweben ist möglich.

Zur Herstellung der erfindungsgemäßen Gemische werden die Einzelkomponenten a), b), c) vorzugsweise durch Erwärmen inhibiert und dann mit d) und eventuell e) beispielsweise innerhalb des Temperaturbereichs von 0 bis 40, vorzugsweise 20 bis 30 °C, miteinander vermischt. Es entstehen so Reaktionsharzgemische, die bei Raumtemperatur eine Topfzeit von mindestens 7 Tagen aufweisen. Bevorzugte lagerstabile Reaktionsharzgemische haben eine Viskosität von 20 bis 20 000 mPas bei 25 °C. Sie zeigen erst oberhalb 60 °C eine chemische Reaktion. Die Gemische können demzufolge oberhalb 60 °C, d.h. insbesondere zwischen 80 und 150 °C ausgehärtet werden, wobei es zwecks Erreichens optimaler Eigenschaften oftmals

angezeigt ist, die resultierenden Kunststoffe bei Temperaturen zwischen 150 und 200 °C, vorzugsweise 160 und 180 °C nachzuhärten.

Als Polyamide können lineare Polykondensate aus Diaminen und Dicarbonsäuren wie 6,6-, 6,7-, 6,8-, 6,9-, 6,10-, 6,12-, 8,8-, 12,12-Polyamide aus Aminosäuren bzw. den entsprechenden Lactamen mit mindestens 5 C-Atomen im Ring, wie z.B. ε-Caprolactam, Laurinlactam, Aminoundecansäure oder Polykondensate aus aromatischen Dicarbonsäure wie Isophthalsäure und Terephthalsäure mit Diaminen wie Hexamethylendiaminen, Octamethylendimain, aus araliphatischen Ausgangsstoffen wie m- oder p-Xylylendiaminen und Adipinsäure, Korksäure, Sebacinsäure, Polykondensate auf Basis von alicyclischen Ausgangsstoffen wie Cyclohexandicarbonsäure, Cyclohexandiessigsäure, Diamino-dicyclohexylmethanen, Isophorondiamin verwendet werden.

Vorzugsweise werden teilkristalline Polyamide verwendet, besonders bevorzugt PA 6 und PA 66 sowie insbesondere Polyamide, die durch anionische Polymerisation von Lactamen wie Pyrrolidon, ε-Caprolactam oder Laurinlactam hergestellt worden sind, darunter wiederum jene, die überwiegend (≧80 %) oder ganz durch anionische Polymerisation von ε-Caprolactam erhalten wurden.

Die wärmehärtbaren Reaktionsharzgemische werden in bekannter Weise auf die auf die erforderliche Temperatur erhitzten Formteile in der gewünschten Schichtdicke, z.B. 0,001 bis 3 mm, vorzugsweise 0,05 bis 1 mm, aufgetragen und gegebenenfalls der (weiteren) Einwirkung von Wärme bei ≧60 °C, jedoch unterhalb der Erweichungstemperatur des Polyamids, unterworfen. Bevorzugt wird die Temperatur der Polyamidformteile so gewählt, daß deren Temperatur zur Härtung ausreicht.

Bei kleineren Formteilen können Tauchverfahren angewendet werden; bei großflächigen Formteilen, z.B. Stoßfängern oder Seitenteilen von Kraftfahrzeugen, kann dies durch Auftragen analog der on-line-Lackierung, gegebenenfalls mit zusätzlicher Erwärmung, geschehen.

Besonders elegant und für die Verwendung besonders bevorzugt gelingt die Aufbringung der Duromerschicht auf Formkörper, die in Rotationsprozessen nach dem Verfahren der aktivierten, anionischen Polymerisation von Lactamen hergestellt werden.

Hier kann die Reaktionsharzschicht vorzugsweise unmittelbar nach der Lactam-Polymerisation unter Formgebung durch Ausnutzen der verbliebenen Lactam-Polymerisationswärme auf die Innenseiten der Formkörper, vorzugsweise im Rotationsverfahren aufgetragen werden, wobei Polyamid-Mehrschichtformkörper entstehen, die zum Transport oder zur Lagerung von Wasser und polaren Solventien deshalb besonders geeignet sind, da der direkte Kontakt dieser Solventien mit der Polyamidmatrix vermieden wird und sowohl ein Polyamid-Quellen, ein Durchdringen bzw. eine Extraktion von Monomeren aus dem Polyamid nicht mehr möglich ist oder zumindest sehr erschwert wird.

Auch der Taumelguß stellt ein geeignetes Verfahren der Aufbringung dar, wenn z.B. Tanks oder Hohlgefäße mit Innenbeschichtung hergestellt werden sollen.

Eine weitere Ausführungsform verwendet den Auftrag der lagerstabilen, relativ niedrigviskosen Reaktionsharzmischung auf Schmelz-Extrusionsfilme, wo der Auftrag auf die noch heiße Filmmatrix erfolgt.

Das bevorzugte Verfahren der Verwendung der Reaktionsmischung zur Herstellung mehrschichtiger Formkörper auf Basis von durch anionische Polymerisation von Lactamen, vorzugsweise von ε-Caprolactam, in Rotationsanlagen erhaltene Polyamide, ist dadurch gekennzeichnet, daß in den Rotationsanlagen ein wärmehärtbares Reaktionsgemisch auf die Innenwände der noch heißen Formkörper aufgebracht wird und dieses unter Ausnutzung der vorhandenen Polymerisations-Restwärme der Polylactam-Formkörper zu einer wasser- und lösungsmittelabweisenden Sperrschicht polymerisiert.

Bei geeigneter Abstimmung von Reaktionsharzgemisch, Katalysator und Härtungsbedingungen erhält man sehr gut haftende Duromerbeschichtungen, die auch gegen polare Solventien inert sind.

Die so modifizierten Formkörper auf Basis von Polyamiden können mit Vorteil überall dort eingesetzt werden, wo Polyamide wegen ihrer guten Gebrauchseigenschaften bewährt sind, zusätzlich jedoch auch dort, wo wegen der Empfindlichkeit von PA-Oberfächen gegen Wasser, organischen Solventien oder Salze (Korrosion) bisher nur begrenzte Verwendungsmöglichkeiten gegeben waren. Dies gilt z.B. für die Herstellung von Kühlerwasserkästen und Außenteilen an Automobilen, wo vorzugsweise glasfaserverstärkte Polyamide eingesetzt werden.

Die durch anionionische Polymerisation von Lactamen hergestellten Hohlkörper wie z.B. Rohre und Tanks können nach der erfindungsgemäßen Ausrüstung mit der Duromer-Sperrschicht sowohl für Lagerung und Transport von Wasser wie auch von Kraftstoffen eingesetzt werden, da kein Rest-Lactam mehr extrahierbar ist. Sie verlieren auch nicht mehr einen Teil ihrer Steifigkeit durch Aufnahme polarer Solventien wie Wasser oder Alkohole unter Weichmachung. Dieser Vorteil macht die erfindungsgemäßen Mehrschicht-Hohlkörper auch für den Einsatz als Kraftfahrzeugtanks, insbesondere für methanolhaltige Kraftstoffe, geeignet.

Beispiel 1

120 Gew.-Teile eines Gemisches (a) aus 60 % 2,4'-Diisocyanatodiphenylmethan und 40 % 4,4'-Diisocyanatodiphenylmethan (NCO-Gehalt = 33,6%) (MDI) werden mit 30 Gew.-Teilen des Diglycidylethers (b) von Bisphenol A (Epoxidzahl = 0,5) und 1,5 ml einer separat hergestellten 1-molaren Lösung von p-Toluolsulfonsäuremethylester (c) in dem obengenannten Diisocyanatgemisch (MDI) gemischt und 30 Min. unter Stickstoff und Rühren auf 120 °C erhitzt. Nach Abkühlen erhält man ein Reaktivharz I mit folgenden Kenndaten:

| | |
|---|---|
| % NCO | = 26,2 (bezogen auf Gesamtgemisch) |
| Viskosität | = 55 mPas/25 °C. |

Verwendung des Reaktivharzes I zur Herstellung von Formkörpern:

100 Gew.-Teile des Reaktivharzes I nach Beispiel 1 werden mit 0,5 Gew.-Teilen Dimethylbenzylammonium-dibutylphosphat (d) und 0,2 ml Dimethylbenzylamin (e3) gemischt und unter Rühren im Vakuum entgast. Diese aktivierte Reaktionsharzmischung wird dann in einen, zuvor durch Taumelguß erzeugten Hohlkörper gegossen. Der Hohlkörper wird erneut bei 120 °C für 30 Min. in Taumelbewegungen versetzt. Man erhält auf diese Weise einen glatten, lösungsmittelfreien Mehrschichtformkörper auf Basis Polyamid, der 2,5 Gew.-% dieser Schicht bezogen auf die Gesamtmasse des Hohlkörpers hat.

Beispiel 2

950 Gew.-Teile eines Gemisches auf 60 %, 2,4'-Diisocyanatodiphenylmethan und 40 % 4,4'-Diisocyanatodiphenylmethan (NCO-Gehalt = 33,6 %) werden bei 50 °C mit 50 Gew.-Teilen des Diglycidylethers von Bisphenol A (Epoxidzahl = 0,585) und 0,5 ml (3,2 mmol) Dimethylbenzylamin gemischt und anschließend auf 120 °C aufgeheizt. Die leicht exotherme Reaktion zeigt den sofortigen Beginn der Isocyanurat- und Oxazolidinonbildung an. Nach 15 Min. Reaktionszeit ohne externe Heizung wird der Ansatz mit Eiswasser gekühlt. Dadurch stellt sich eine Innentemperatur von ca. 90 °C ein. Dem Ansatz wird eine Probe entnommen. Die Probe ist bei Raumtemperatur ein festes, klebriges Harz und besitzt einen NCO-Gehalt von 18,4 % NCO. Durch Zugabe von 6,5 ml Inhibitorlösung I (= 15,4 Gew.-%ige Lösung von p-Toluolsulfonsäuremethylester (c) in einem Gemisch aus 60 % 2,4'-Diisocyanatodiphenylmethan und 40 % 4,4'-Diisocyanatodiphenylmethan) wird die Reaktion abgebrochen. Anschließend setzt man dem Ansatz weitere 596 Gew.-Teile der oben genannten Diisocyanatkomponente und 31 Gew.-Teile des oben genannten Diglycidylethers zu und rührt das Gemisch bei 120 °C, bis eine klare homogene Lösung entstanden ist. Es entsteht ein bei Raumtemperatur flüssiges, klares, gelbes, lagerstabiles Harz mit einer Viskosität von 9300 mPas bei 25 °C und einem NCO-Gehalt von 23,6 %.

100 Gew.-Teile des Harzes gemäß Beispiel 2 mit einer Viskosität von $\eta_{25°C}$ = 9300 mPas und einem NCO-Gehalt von 23,6 % NCO werden mit 0,5 Gew.-Teilen Dimethylbenzylammonium-dibutylphosphat (d) gemischt und bei 80 °C unter Rühren im Vakuum bei ca. 5 mbar entgast, bis die Flüssigkeit im Behälter blasenfrei vorliegt. Die dazu benötigte Zeit beträgt ca. 20 Minuten.

30 Gew.-Teile dieser Reaktionsharzmischung wurden in eine mit 30 $Umin^{-1}$ biaxial rotierende Flasche gegeben, die unmittelbar vorher durch aktivierte anionische Polymerisation von Caprolactam hergestellt worden war und deren Innentemperatur ca. 110 °C betrug. Das Gewichtsverhältnis von Harz zu Flasche betrug ca. 1:22.

Anschließend wurden weitere 2 bis 3 Min. rotiert und die Flasche aus der Form genommen. Das Reaktionsharz war zu einem geschlossenen, im Schnitt ca. 0,3 mm dicken Oberflächenfilm gehärtet, welcher eine ausgezeichnete Haftung zum Polycaprolactam (Polyamid 6) aufwies.

Beispiel 3

95 Gew.-Teile Triisocyanatohexylbiuret (a) werden mit 5 Gew.-Teilen des Bisglycidylesters (b) der Hexahydrophthalsäure gemischt und mit 0,5 Gew.-Teilen p-Toluolsulfonsäure-methylester (c) 30 Minuten bei 120 °C unter Stickstoff gerührt. Nach Abkühlen erhält man ein lagerstabiles Reaktionsharz C mit folgenden Kenndaten:

| | |
|---|---|
| % NCO | = 21 |
| $\eta_{25°C}$ | = 2020 mPas. |

Das Reaktionsharz C wird mit 1 Gew.-Teile Triethylmethylammonium-methanmethylphosphonat (d) gemischt und gelangt so als wärmeaktivierbare, lagerstabile Reaktionsharzmischung zum Einsatz im Polyamid-Schleuderguß.

Wie in Beispiel 2 beschrieben, wird eine Polyamid-6-Flasche beschichtet. Der Duromer-Film weist eine ausgezeichnete Haftung und hohe Zähigkeit auf und besitzt sehr gute Barrier-Wirkung gegenüber Wasser und Solventien.

Beispiel 4

In diesem Beispiel wird die ausgezeichnete Sperrwirkung der erfindungsgemäß aufzubringenden Duromerschicht gegen Wasser dargelegt.

In eine nach Beispiel 2 beschichtete Guß-PA 6-Flasche nach dem aktivierten anionischen Reaktionsgußverfahren wird Wasser gefüllt und die Gewichtszunahme der Flasche bestimmt. Hierzu wird das Wasser nach definierter Zeit ausgegossen, die Flasche mit Luft getrocknet und gewogen. In der Tabelle 1 ist die prozentuale Gewichtszunahme gegenüber der einer unmodifizierten Flasche aufgeführt.

Tabelle 1

| Tage | Gewichtszunahme | |
|---|---|---|
| | Bsp. 2 [%] | Vergleich [%] |
| 1 | 0,11 | 0,69 |
| 3 | 0,14 | 1,15 |
| 8 | 0,21 | 2,23 |
| 15 | 0,43 | 3,43 |
| 24 | 0,53 | 4,35 |

**Patentansprüche**

**1.** Verwendung lagerfähiger, wärmehärtbarer Reaktionsharzgemische, die
a) mindestens ein organisches Polyisocyanat,
b) mindestens eine, mindestens zwei Epoxidgruppen aufweisende organische Verbindung
in einer solchen Menge, die einem Äquivalentverhältnis von Isocyanatgruppen zu Epoxidgruppen von 1,2:1 bis 70:1 entspricht,
c) mindestens ein, die Reaktion von a) und b) inhibierendes Alkylierungsmittel,
d) mindestens einen, durch Wärme aktivierbaren Katalysator in Mengen von 0,01 bis 10 Gew.-%, (bezogen auf a) + b) + c)),
e) und gegebenenfalls weitere, übliche Hilfs- und Zusatzmittel in wirksamen Mengen
enthalten,
zur Herstellung von Mehrschichtformkörpern mit Barrier-Eigenschaften auf Polyamidbasis, mit einer ausgehärteten Duromerschicht, unter Auftragen des Reaktionsharzgemisches auf die Polyamidformkörper und thermisches Aushärten der Reaktionsharzgemische auf den Polyamidformkörpern.

**2.** Verwendung nach Anspruch 1, dadurch gekennzeichnet, daß das Alkylierungsmittel c) ein Ester einer organischen Sulfonsäure, Methyliodid oder Dimethylsulfat ist und in Mengen von 0,001 bis 1 Gew.-%, vorzugsweise 0,005 bis 0,3 Gew.-%, bezogen auf die Summe aus a) und b), eingesetzt wird.

**3.** Verwendung nach mindestens einem der Ansprüche 1 und 2, dadurch gekennzeichnet, daß als Polyisocyanat a) ein Polyisocyanat der Formel

$Q(NCO)_n$

enthalten ist, in der

n = 2 bis 4 und

Q einen aliphatischen Kohlenwasserstoffrest mit 2 bis 18 C-Atomen, einen cycloaliphatischen Rest mit 4 bis 19 C-Atomen, einen aromatischen Rest mit 6 bis 15 C-Atomen oder einen araliphatischen Rest mit 8 bis 13 C-Atomen

bedeutet.

**4.** Verwendung nach Anspruch 3, dadurch gekennzeichnet, daß als Polyisocyanat a) ein Isomeren- und/oder Homologengemisch von Polyisocyanaten der Diphenylmethanreihe mit einem Gehalt von mehr als 20 Gew.-% 2,4'-Diisocyanatodiphenylmethan enthalten ist.

**Claims**

**1.** The use of storable, heat-curing isocyanate/epoxy resin mixtures containing

a) at least one organic polyisocyanate,

b) at least one organic compound containing at least two epoxide groups

in a quantity corresponding to an equivalent ratio of isocyanate groups to epoxide groups of 1.2:1 to 70:1,

c) at least one alkylating agent inhibiting the reaction of a) and b),

d) at least one heat-activatable catalyst in quantities of 0.01 to 10% by weight (based on a) + b) + c)),

e) and optionally other typical auxiliaries and additives in effective quantities,

for the production of polyamide-based multilayer mouldings with barrier properties comprising a cured thermoset layer by application of the isocyanate/epoxy resin mixture to the polyamide mouldings and heat curing of the mixture on the polyamide mouldings.

**2.** The use claimed in claim 1, characterized in that the alkylating agent c) is an ester of an organic sulfonic acid, methyl iodide or dimethyl sulfate and is used in quantities of 0.001 to 1% by weight and preferably in quantities of 0.005 to 0.3% by weight, based on the sum of a) and b).

**3.** The use claimed in at least one of claims 1 and 2, characterized in that the polyisocyanate a) is a polyisocyanate corresponding to the formula:

$$Q(NCO)_n$$

in which

n = 2 to 4 and

Q is an aliphatic hydrocarbon radical containing 2 to 18 carbon atoms, a cycloaliphatic radical containing 4 to 19 carbon atoms and aromatic radical containing 6 to 15 carbon atoms or an araliphatic radical containing 8 to 13 carbon atoms.

**4.** The use claimed in claim 3, characterized in that the polyisocyanate a) is an isomer and/or homolog mixture of polyisocyanates of the diphenyl methane series containing more than 20% by weight of 2,4'-diisocyanatodiphenyl methane.

**Revendications**

**1.** Utilisation de mélanges résineux réactionnels thermodurcissables résistant au stockage qui contiennent :

a) au moins un polyisocyanate organique,

b) au moins un composé organique présentant au moins deux groupements époxy

en une quantité telle que le rapport en équivalents des groupements isocyanate aux groupements époxy est de 1,2:1 à 70:1,

c) au moins un agent d'alkylation inhibant la réaction entre a) et b),

d) au moins un catalyseur qui peut être activé par la chaleur, en une quantité de 0,01 à 10 % en masse (par rapport à a) + b) + c)),

e) et, le cas échéant, d'autres additifs ou adjuvants usuels en quantités efficaces,

pour la préparation d'objets à base de polyamide, à plusieurs couches, ayant des propriétés de

barrière comportant une couche de duromère, en appliquant le mélange résineux réactionnel sur l'objet en polyamide et en faisant durcir thermiquement le mélange réactionnel sur l'objet en polyamide.

**2.** Utilisation selon la revendication 1, caractérisée en ce que l'agent d'alkylation c) est un ester d'un acide sulfonique organique, de l'iodure de méthyle ou du sulfate de diméthyle et qu'on l'utilise à raison de 0,001 à 1 % en masse, de préférence 0,005 à 0,3 % en masse par rapport à la somme de a) et b).

**3.** Utilisation selon au moins l'une des revendications 1 et 2, caractérisée en ce qu'on utilise en tant que polyisocyanate a) un polyisocyanate de formule :

$Q(NCO)_n$

dans laquelle

n = 2 à 4 et

Q représente un radical hydrocarboné aliphatique en $C_2$-$C_{18}$,
un radical cycloaliphatique en $C_4$-$C_{19}$,
un radical aromatique en $C_6$-$C_{15}$ ou
un radical araliphatique en $C_8$-$C_{13}$.

**4.** Utilisation selon la revendication 3, caractérisée en ce qu'on utilise comme polyisocyanate a) un mélange d'isomères et/ou d'homologues de polyisocyanates de la série du diphénylméthane ayant une teneur en 2,4'-diisocyanatodiphénylméthane supérieure à 20 % en masse.